(19) **Europäisches Patentamt**
**European Patent Office**
**Office européen des brevets**

(11) **EP 4 521 836 A1**

(12) **EUROPEAN PATENT APPLICATION**
published in accordance with Art. 153(4) EPC

(43) Date of publication:
**12.03.2025 Bulletin 2025/11**

(21) Application number: **23915387.7**

(22) Date of filing: **13.01.2023**

(51) International Patent Classification (IPC):
***H04W 72/0453*** (2023.01)

(52) Cooperative Patent Classification (CPC):
**H04W 72/0453**

(86) International application number:
**PCT/CN2023/072178**

(87) International publication number:
**WO 2024/148618 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **CHEN, Wenhong
Dongguan, Guangdong 523860 (CN)**

(74) Representative: **RGTH
Patentanwälte PartGmbB
Neuer Wall 10
20354 Hamburg (DE)**

(54) **COMMUNICATION METHODS, TERMINAL DEVICES AND NETWORK DEVICES**

(57) Provided are communication methods, terminal devices and network devices. A method comprises: a terminal device determining PTRS information according to a DMRS configuration; and the terminal device determining PTRS transmission parameters according to the PTRS information, wherein the PTRS information comprises one or more of the following information items: PTRS power boost value information, the association relationship between a PTRS port and a DMRS port, and the length of information indicating the association of the PTRS port and the DMRS port in a DCI; and the DMRS configuration comprises the length of a frequency domain OCC. Different lengths of the frequency domain OCC can support different numbers of DMRS ports on one OFDM symbol, that is, different DMRS configurations can support different numbers of DMRS ports on one OFDM symbol. On the basis of the methods provided by the present application, communication devices can determine reasonable PTRS information according to DMRS configurations, so as to determine PTRS transmission parameters, thus avoiding unnecessary DCI signaling overhead and information redundancy.

Terminal device

Network device

S310: Determine PTRS information based on a DMRS configuration

S320: Determine PTRS information based on a DMRS configuration

S330: Determine a transmission parameter of a PTRS based on the PTRS information

S340: Determine a transmission parameter of a PTRS based on the PTRS information

S350: PTRS

FIG. 3

**Description**

**TECHNICAL FIELD**

This application relates to the field of communications technologies, and more specifically, to a communication method, a terminal device, and a network device.

**BACKGROUND**

With development of communications technologies, a quantity of demodulation reference signal (demodulation reference signal, DMRS) ports that may be transmitted on one orthogonal frequency division multiplexing (orthogonal frequency division multiplexing, OFDM) symbol increases. For example, in Rel-15, orthogonality between uplink DMRS ports may be ensured by using a frequency-domain orthogonal cover code (orthogonal cover code, OCC) with a length of 2. In a case in which the length of the frequency-domain OCC is 2, at most four or six DMRS ports may be transmitted on one OFDM symbol. In Rel-18, DMRS enhancement is introduced in a communications system. With the DMRS enhancement, a frequency-domain OCC with a length of 4 may be supported, so that at most 8 or 12 DMRS ports may be transmitted on one OFDM symbol. In this case, since a quantity of DMRS ports that can be supported on one OFDM symbol varies depending on different OCC lengths, a power boost value for a phase tracking reference signal (phase tracking reference signal, PTRS) and a quantity of DMRS ports in candidate association with a PTRS port vary accordingly. For how to indicate PTRS information corresponding to different OCC lengths, no proper solution has been provided in related technologies.

**SUMMARY**

This application provides a communication method, a terminal device, and a network device. Various aspects involved in this application are described below.
According to a first aspect, a communication method is provided. The method includes: determining, by a terminal device, PTRS information based on a DMRS configuration; and determining, by the terminal device, a transmission parameter of a PTRS based on the PTRS information, where the PTRS information includes one or more of following information: PTRS power boost value information, a PTRS port and DMRS port association, and an information length of a PTRS port and DMRS port association indication in DCI, where the DMRS configuration includes a length of a frequency-domain OCC.
According to a second aspect, a communication method is provided. The method includes: determining, by a network device, PTRS information based on a DMRS configuration; and determining, by the network device, a transmission parameter of a PTRS based on the PTRS information, where the PTRS information includes one or more of following information: PTRS power boost value information, a PTRS port and DMRS port association, and an information length of a PTRS port and DMRS port association indication in DCI, where the DMRS configuration includes a length of a frequency-domain OCC.
According to a third aspect, a terminal device is provided. The device includes: a first determining unit, configured to determine PTRS information based on a DMRS configuration; and a second determining unit, configured to determine a transmission parameter of a PTRS based on the PTRS information, where the PTRS information includes one or more of following information: PTRS power boost value information, a PTRS port and DMRS port association, and an information length of a PTRS port and DMRS port association indication in DCI, where the DMRS configuration includes a length of a frequency-domain OCC.
According to a fourth aspect, a network device is provided. The device includes: a third determining unit, configured to determine PTRS information based on a DMRS configuration; and a fourth determining unit, configured to determine a transmission parameter of a PTRS based on the PTRS information, where the PTRS information includes one or more of following information: PTRS power boost value information, a PTRS port and DMRS port association, and an information length of a PTRS port and DMRS port association indication in DCI, where the DMRS configuration includes a length of a frequency-domain OCC.
According to a fifth aspect, a terminal device is provided, and includes a processor and a memory. The memory is configured to store one or more computer programs, and the processor is configured to invoke a computer program in the memory to cause the terminal device to perform some or all of the steps in the method according to the first aspect.
According to a sixth aspect, a network device is provided. The device includes a processor and a memory. The memory is configured to store one or more computer programs. The processor is configured to invoke the computer program in the memory, to cause the network device to perform some or all of the steps of the method according to the second aspect.
According to a seventh aspect, an embodiment of this application provides a communications system. The system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a terminal device and/or a network device to perform some or all of the steps in the method according to the foregoing aspects.

According to a ninth aspect, an embodiment of this application provides a computer program product. The computer program product includes a non-transitory computer-readable storage medium storing a computer program, and the computer program is operable to cause a terminal device and/or a network device to perform some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

A quantity of DMRS ports that can be supported on one OFDM symbol may vary depending on different frequency-domain OCC lengths, that is, a quantity of DMRS ports that can be supported on one OFDM symbol may vary depending on different DMRS configurations. According to the method provided in this application, a communications device can determine proper PTRS information based on the DMRS configuration, so as to determine the transmission parameter of the PTRS, thereby avoiding unnecessary DCI signalling overheads and information redundancy.

## BRIEF DESCRIPTION OF THE DRAWINGS

FIG. 1 is a schematic diagram of a wireless communications system to which an embodiment of this application is applied.
FIG. 2A and FIG. 2B are respectively example diagrams of DMRSs.
FIG. 3 is a schematic flowchart of a communication method according to an embodiment of this application.
FIG. 4 is a schematic structural diagram of a terminal device according to an embodiment of this application.
FIG. 5 is a schematic structural diagram of a network device according to an embodiment of this application.
FIG. 6 is a schematic structural diagram of an apparatus for communication according to an embodiment of this application.

## DETAILED DESCRIPTION OF THE EMBODIMENTS

The technical solutions in this application are described below with reference to the accompanying drawings.

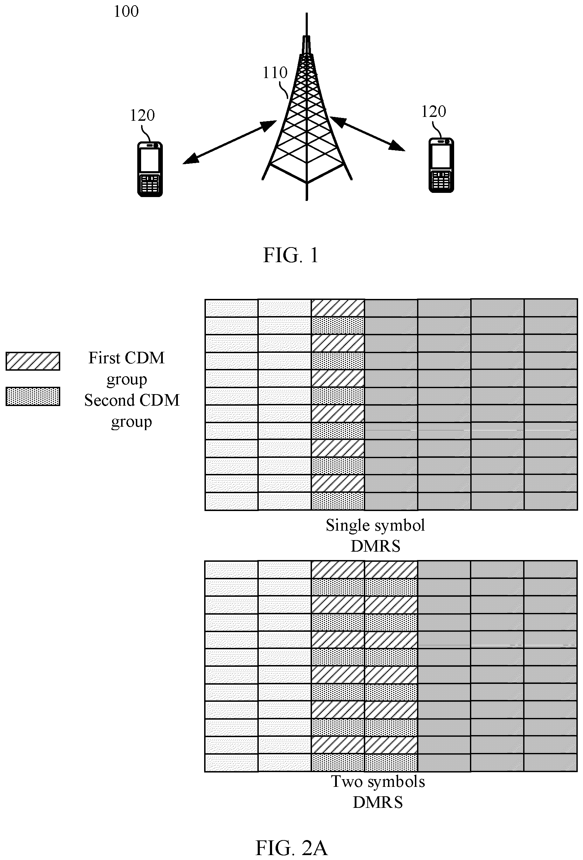

FIG. 1 shows a wireless communications system 100 to which an embodiment of this application is applied. The wireless communications system 100 may include a communications device. The communications device may include a network device 110 and/or a terminal device 120. The network device 110 may be a device that communicates with the terminal device 120. The network device 110 may provide communication coverage for a specific geographic area, and may communicate with the terminal device 120 located within the coverage.

FIG. 1 illustratively shows one network device and two terminal devices. Optionally, the wireless communications system 100 may include a plurality of network devices, and another quantity of terminal devices may be included in a coverage of each network device. This is not limited in embodiments of this application.

Optionally, the wireless communications system 100 may further include other network entities such as a network controller and a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may serve as a scheduling entity, which provides a sidelink signal between UEs in vehicle-to-everything (vehicle-to-everything, V2X), or device-to-device (device to device, D2D) communications, or the like. For example, a cellular phone and a vehicle communicate with each other by using a sidelink signal. A cellular phone and a smart home device communicate with each other, without the relay of a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be interchanged with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in D2D, V2X, and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be stationary or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software running on hardware, or by virtualization functions instantiated on a platform (for example, a cloud platform).

In some communications systems (for example, an NR system), DMRSs may be classified into a front-loaded DMRS and an additional DMRS. The front-loaded DMRS is generally located on first several OFDM symbols of a slot. The additional DMRS is a repetition of the front-loaded DMRS, and is used to ensure performance in a high-speed scenario. The front-loaded DMRS may occupy one or two OFDM symbols, which is configured by the network device.

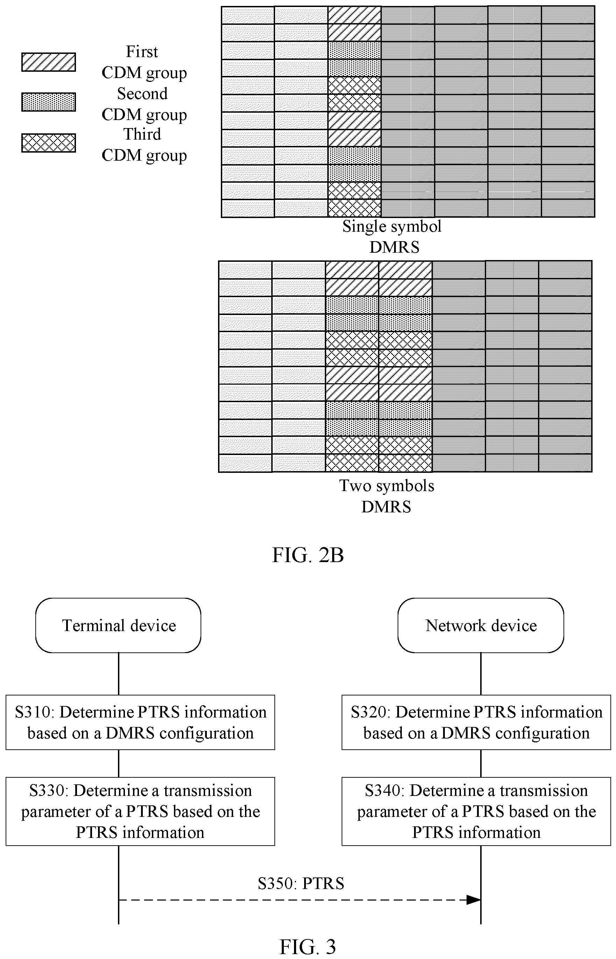

Some communications systems (for example, an NR system) support two different DMRS types: a type 1 (type 1) and a type 2 (type 2), with different types of resources having different occupation manners. The following describes DMRSs of the type 1 and the type 2 with reference to FIG. 2A and FIG. 2B, respectively.

FIG. 2A is example diagrams of DMRSs of the type 1. As shown in FIG. 2A, two code division multiplexing (code division multiplexing, CDM) groups may be supported on one OFDM symbol of each physical resource block (physical resource block, PRB). Each CDM group may include six subcarriers. Each CDM group may support two ports. Orthogonality between the two ports may be maintained by using the OCC. For example, an OCC used for one port on different carriers may be [+1 +1 +1 +1 +1 +1], and an OCC used for the other port may be [+1 -1 +1 -1 +1 -1]. In this way, the DMRS of the type 1 may support at most four orthogonal ports on one OFDM symbol, and may support at most eight orthogonal ports on two OFDM symbols (a time-domain orthogonal cover code (time domain orthogonal cover code, TD-OCC) may be used between the two OFDM symbols). Specifically, the first CDM group of the first DMRS symbol may include a port {1000, 1001}, and the second CDM group of the first DMRS symbol may include a port {1002, 1003}. The first CDM group of the second DMRS symbol may include a port {1004, 1005}, and the second CDM group of the second DMRS symbol may include a port {1006, 1007}.

FIG. 2B is example diagrams of DMRSs of the type 2. As shown in FIG. 2B, three CDM groups may be supported on one OFDM symbol of each PRB. Each CDM group may include four subcarriers which are adjacent in pairs. Each CDM group may support two ports, and orthogonality between the two ports may be maintained by using the OCC. For example, an OCC used for one port on different carriers may be [+1 + 1 + 1 +1], and an OCC used for the other port may be [+1 -1 +1 -1]. In this way, the DMRS of the type 2 may support at most 6 orthogonal ports on one OFDM symbol, and may support at most 12 orthogonal ports on two OFDM symbols (a TD-OCC may be used between the two OFDM symbols). Specifically, the first CDM group of the first DMRS symbol may include a port {1000, 1001}, the second CDM group of the first DMRS symbol may include a port {1002, 1003}, and the third CDM group of the first DMRS symbol may include a port {1004, 1005}. The first CDM group of the second DMRS symbol may include a port {1006, 1007}, the second CDM group of the second DMRS symbol may include a port {1008, 1009}, and the third CDM group of the second DMRS symbol may include a port {1010, 1011}.

In some embodiments, the terminal device may support at most four antenna ports for uplink transmission. To support uplink transmission in a frequency range 2 (frequency range 2, FR2), the terminal device may be configured with one or two PTRS ports. Each PTRS port may be associated with different transmission layers/DMRSs. The PTRS may be used for phase tracking and adjustment of an associated transmission layer/DMRS, thereby ensuring performance of DMRS channel estimation and data demodulation.

For a full coherent codebook, all transmission layers/DMRS ports may be associated with a same PTRS port. In this case, the network device configures only one PTRS port. The PTRS ports uses a same sequence, a same frequency domain resource, and a same precoding matrix as those used by a DMRS port associated with the PTRS port. The DMRS port associated with the PTRS port may be configured to determine a transmission manner of a PTRS.

In a case in which partial coherent and non-coherent codebooks are configured, a quantity of PTRS ports to be actually transmitted depends on a transmit precoding matrix indicator (transmit precoding matrix indicator, TPMI) and a quantity of transmission layers. Physical uplink shared channel (physical uplink shared channel, PUSCH) antenna ports 1000 and 1002 and DMRSs (transmission layers) transmitted on the two ports are associated with a PTRS port 0 (that is, a phase estimation result on the PTRS port may be used for a PUSCH and a DMRS transmitted on the two antenna ports), and PUSCH antenna ports 1001 and 1003 and DMRSs (transmission layers) transmitted on the two ports are associated with a PTRS port 1.

If there are a plurality of DMRS ports supported for transmission on an antenna port, a DMRS port actually associated with the corresponding PTRS port is determined based on a DMRS port and PTRS port association indication in DCI.

With reference to Table 1 and Table 2, the DMRS port and PTRS port association indication is described below by using a DMRS in the Rel-15 protocol as an example. When a quantity of PTRS ports is 1, a DMRS port associated with the PTRS port is indicated by using DCI signalling of two bits, that is, the DMRS port and PTRS port association indication is two bits. Table 1 shows a DMRS association indication when a single PTRS port is configured. As shown in Table 1, the two bits may be used to indicate values 0 to 3, and DMRS ports corresponding to 0 to 3 are shown in Table 1. When a quantity of PTRS ports is 2, a DMRS port associated with each PTRS port is indicated by using DCI signalling of two bits, that is, the DMRS port and PTRS port association indication is two bits. Table 2 shows a DMRS association indication when two PTRS ports are configured. As shown in Table 2, the two bits for the DMRS port and PTRS port association indication includes a most significant bit (most significant bit, MSB) of one bit and a least significant bit (least significant bit, LSB) of one bit. DMRS ports corresponding to values of the MSB and the LSB are shown in Table 2.

Table 1

| Indicated value (indicated value) | DMRS port (DMRS port) |
|---|---|
| 0 | First scheduled DMRS port (1st scheduled DMRS port) |
| 1 | Second scheduled DMRS port (2nd scheduled DMRS port) |
| 2 | Third scheduled DMRS port (3rd scheduled DMRS port) |
| 3 | Fourth scheduled DMRS port (4th scheduled DMRS port) |

Table 2

| Value of the MSB (Value of MSB) | DMRS port (DMRS port) | | Value of the LSB (Value of LSB) | DMRS port (DMRS port) |
|---|---|---|---|---|
| 0 | First DMRS port which shares a PTRS port 0 (1st DMRS port which shares PTRS port 0) | | 0 | First DMRS port which shares a PTRS port 1 (1st DMRS port which shares PTRS port 1) |
| 1 | Second DMRS port which shares a PTRS port 0 (2nd DMRS port which shares PTRS port 0) | | 1 | Second DMRS port which shares a PTRS port 1 (2nd DMRS port which shares PTRS port 1) |

Since one PTRS port may be associated with a plurality of transmission layers, power of the PTRS needs to be adjusted based on a quantity of transmission layers configured to ensure power consistency on different OFDM symbols. The DMRS in Rel-15 is used as an example. Based on a quantity of $(n_{layer}^{PUSCH})$ PUSCH transmission layers, a codebook coherence configuration, and a transmission scheme (codebook based or non-codebook based transmission), power boosting for the PTRS relative to an associated DMRS port may be obtained from Table 3. A specific power boosting scheme may be configured by the network device. It should be noted that a PTRS power boost value is a boost value (in a unit of dB) of a transmit power of a PTRS port relative to a DMRS port or a transmission layer associated with the PTRS port. Qp denotes a quantity of PTRS ports currently configured, and a value of Qp may be 1 or 2. A codebook coherence configuration and a transmission scheme configuration may be obtained by using higher layer signalling. The codebook coherence configuration may be a full coherent (full conherent) codebook, a partial coherent (partial coherent) codebook, or a non-coherent (non-coherent) codebook. The transmission scheme configuration may be codebook based (codebook based) or non-codebook based (non-codebook based).

Table 3

| Power boosting configuration | Quantity ( $n_{layer}^{PUSCH}$ ) of PUSCH transmission layers | | | | | | | |
|---|---|---|---|---|---|---|---|---|
| | 1 | 2 | | 3 | | 4 | | |
| | All cases | Full coherent codebook | Partial coherent/ non-coherent codebook and non-codebook | Full coherent codebook | Partial coherent/ non-coherent codebook and non-codebook | Full coherent codebook | Partial coherent codebook | Non-coherent codebook and non-codebook |
| 00 | 0 | 3 | 3Qp-3 | 4.77 | 3Qp-3 | 6 | 3Qp | 3Qp-3 |
| 01 | 0 | 3 | 3 | 4.77 | 4.77 | 6 | 6 | 6 |
| 10 | Reserved | | | | | | | |
| 11 | Reserved | | | | | | | |

With development of communications technologies, a quantity of DMRS ports that may be transmitted on one OFDM symbol increases. For example, in Rel-15, orthogonality between uplink DMRS ports may be ensured by using a frequency-domain OCC with a length of 2. In a case in which the length of the frequency-domain OCC is 2, at most four (DMRS type 1) or six (DMRS type 2) DMRS ports may be transmitted on one OFDM symbol. In Rel-18, DMRS enhancement is introduced in a communications system. The DMRS enhancement may support a frequency-domain OCC with a length of 4, so that at most 8 (DMRS type 1) or 12 (DMRS type 2) DMRS ports may be transmitted on one OFDM symbol. In this case, since a quantity of DMRS ports that can be supported by different OCC lengths on one OFDM symbol varies, a corresponding PTRS power boost value and a quantity of DMRS ports in candidate association with a PTRS port vary accordingly. If the PTRS power boost value information or the PTRS port and DMRS port association is designed based on a maximum quantity of DMRS ports, it may result in that part of information is redundant in some cases. In addition, if an information length of PTRS-DMRS port association indication is determined based on a maximum quantity of uplink DMRS ports, it may cause unnecessary DCI signalling overheads.

In an example in which a maximum quantity of uplink DMRS ports is 8, if a table for PTRS power boost values and/or a table for PTRS port and DMRS port associations are designed based on a quantity of DMRS ports being 8 and in a case in which the actual quantity of uplink DMRS ports is 4, corresponding information, in the two tables, indicating that the quantity of DMRS ports ranges from 5 to 8 is redundant. In addition, if the table for PTRS port and DMRS port associations is designed based on the quantity of DMRS ports being 8, a quantity of bits for the PTRS port and DMRS port association indication in the DCI needs to support a case in which the quantity of DMRS ports is 8. Therefore, in a case in which the actual quantity of uplink DMRS ports is 4, some of the bits for the PTRS port and DMRS port association indication in the DCI may not be used, resulting in unnecessary DCI signalling overheads.

To resolve the foregoing problem, this application provides a communication method.

FIG. 3 is a schematic flowchart of a communication method according to an embodiment of this application. The method illustrated in FIG. 3 may be performed by a terminal device and a network device. The method illustrated in FIG. 3 may include steps S310 to S340.

Step S310: The terminal device determines PTRS information based on a DMRS configuration.

Step S320: The network device determines PTRS information based on the DMRS configuration.

The DMRS configuration may include a length of a frequency-domain OCC. The length of the frequency-domain OCC may be, for example, 2 or 4. It may be understood that a communications device may determine the PTRS information based on whether the length of the frequency-domain OCC is 2 or 4.

In some embodiments, the length of the frequency-domain OCC may be configured by using higher layer signalling. For example, whether the length of the frequency-domain OCC is 2 or 4 may be configured by the network device for the terminal device by using higher layer signalling. In some embodiments, the length of the frequency-domain OCC may be indicated by DCI.

In some embodiments, the length of the frequency-domain OCC may also be described by using a DMRS. For example, the length of the frequency-domain OCC may be described as an Rel-15 DMRS or an Rel-18 enhanced DMRS. The Rel-15 DMRS may correspond to a frequency-domain OCC length of 2. The Rel-18 enhanced DMRS may correspond to a frequency-domain OCC length of 4.

In some embodiments, the DMRS configuration may further include a DMRS type. The DMRS type may be, for example, a type 1 or a type 2. The DMRS type may be configured by using higher layer signalling.

The PTRS information may include one or more of following information: PTRS power boost value information, a PTRS port and DMRS port association, and an information length of a PTRS port and DMRS port association indication in DCI. These information is described separately below.

The PTRS power boost value information may be used to indicate a PTRS power boost value. For example, the PTRS power boost value information may include a correspondence between a quantity of transmission layers and a PTRS power boost value. Alternatively, the PTRS power boost value information may include a correspondence between a codebook coherence configuration and a PTRS power boost value. Alternatively, the PTRS power boost value information may include a correspondence between a power boosting configuration and a PTRS power boost value.

In an implementation, the PTRS power boost value information may indicate only a PTRS power boost value corresponding to a quantity of transmission layers that is less than a maximum quantity of transmission layers. In an example in which the maximum quantity of transmission layers is 8, the PTRS power boost value information may indicate a PTRS power boost value only for a quantity of transmission layers ranging from 1 to 4, or the PTRS power boost value information may indicate a PTRS power boost value only for a quantity of transmission layers ranging from 1 to 6. In an implementation, the PTRS power boost value information may indicate PTRS power boost values corresponding to all possible quantities of transmission layers. In a further example in which the maximum quantity of transmission layers is 8, the PTRS power boost value information may indicate a PTRS power boost value for a quantity of transmission layers ranging from 1 to 8. Based on the foregoing implementation, the communications device may determine, based on the DMRS configuration, an indication of the PTRS power boost value information: indicating a PTRS power boost value only for a quantity of transmission layers ranging from 1 to 4, indicating a PTRS power boost value only for a quantity of transmission layers ranging from 1 to 6, or indicating a PTRS power boost value for a quantity of transmission layers ranging from 1 to 8.

It should be noted that a specific value of the maximum quantity of transmission layers is not limited in this application. The maximum quantity of transmission layers being 8 is used as an example for description above. In some embodiments, the maximum quantity of transmission layers may alternatively be 6, 12, or another value.

It should be noted that, a representation manner of the PTRS power boost value information is not limited in this application. In some embodiments, the PTRS power boost value information may be represented by using a table. For example, the PTRS power boost value information may be represented by a table for PTRS power boost values.

For ease of description, the PTRS port and DMRS port association is described below as a PTRS-DMRS port association. The PTRS-DMRS port association may be used to indicate an association between a PTRS port and a DMRS port. For example, the PTRS-DMRS port association may include a correspondence between the PTRS port and DMRS port association in the DCI and candidate one or more DMRS ports association with the PTRS port. Alternatively, the PTRS-DMRS port association may be used to indicate one DMRS port from one or more DMRS ports in candidate association with the PTRS port. Alternatively, the PTRS-DMRS port association may indicate one or more DMRS ports in candidate association with the PTRS port.

It should be noted that, in some embodiments, "candidate association" may also be referred to as "possible association", that is, the PTRS-DMRS port association may include a list of all DMRS ports that are possibly associated with the PTRS port, and a DMRS port actually associated with the PTRS port may be one of DMRS ports in the list.

A DMRS port actually associated with the PTRS port may be indicated by the PTRS port and DMRS port association indication in the corresponding PTRS-DMRS port association. For ease of description, the PTRS port and DMRS port association indication is described below as a PTRS-DMRS port association indication.

In some implementations, the PTRS-DMRS port association may include a correspondence between the PTRS-DMRS port association indication and candidate one or more DMRS ports association with the PTRS port. For example, the PTRS-DMRS port association may include a correspondence between the PTRS-DMRS port association indication and two candidate DMRS ports association with the PTRS port. Alternatively, the PTRS-DMRS port association may include a correspondence between the PTRS-DMRS port association indication and three candidate DMRS ports association with the PTRS port. Alternatively, the PTRS-DMRS port association may include a correspondence between the PTRS-DMRS port association indication and four candidate DMRS ports association with the PTRS port. Alternatively, the PTRS-DMRS port association may include a correspondence between the PTRS-DMRS port association indication and candidate six DMRS ports association with the PTRS port. Alternatively, the PTRS-DMRS port association may include a correspondence between the PTRS-DMRS port association indication and candidate eight DMRS ports association with the PTRS port. Based on the foregoing implementation and based on the DMRS configuration, step S310 or step S320 may include that: determining, by the communications device, that the PTRS-DMRS port association includes a correspondence between the PTRS-DMRS port association indication and candidate several DMRS ports association with the PTRS port.

It should be noted that, a representation manner of the PTRS-DMRS port association is not limited in this application. In some embodiments, the PTRS-DMRS port association may be represented by using a table. For example, the PTRS-DMRS port association may be represented by a table for PTRS-DMRS port associations.

In some embodiments, the network device may determine the PTRS-DMRS port association indication in the DCI based on the PTRS information, and transmit the DCI. The terminal device may receive the DCI, parse the PTRS-DMRS port association indication in the DCI based on the information length of the PTRS-DMRS port association indication, and then determine, based on the PTRS-DMRS port association, a DMRS port associated with the PTRS port.

In some implementations, the information length of the PTRS-DMRS port association indication may be, for example, two bits or three bits. Based on this implementation, the communications device may determine, based on the DMRS configuration, whether the information length of the PTRS-DMRS port association indication is two bits or three bits.

In some embodiments, bits for the PTRS-DMRS port association indication may include a least significant bit (least significant bit, LSB) and a most significant bit (most significant bit, MSB). The LSB may be a low-order bit in the bits for the PTRS-DMRS port association indication, and the MSB may be a high-order bit in the bits for the PTRS-DMRS port association indication.

Step S330: The terminal device determines a transmission parameter of a PTRS based on the PTRS information.

Step S340: The network device determines a transmission parameter of a PTRS based on the PTRS information.

The transmission parameter of the PTRS may be a parameter related to transmission of the PTRS. For example, the transmission parameter of the PTRS may include one or more of following: a transmit power of the PTRS, a power difference between a PTRS and a DMRS, a DMRS port associated with the PTRS port, a sequence of the PTRS, and a precoding manner of the PTRS.

As described above, a quantity of DMRS ports that can be supported on one OFDM symbol varies depending on different frequency-domain OCC lengths, that is, a quantity of DMRS ports that can be supported on one OFDM symbol varies depending on different DMRS configurations. According to the method provided in this application, the communications device can determine proper PTRS information based on the DMRS configuration, so as to determine the transmission parameter of the PTRS, thereby avoiding unnecessary DCI signalling overheads and information redundancy.

It should be noted that the PTRS information may also be determined based on other information different from the DMRS configuration, which is not limited in this application. In some embodiments, the PTRS information may also be determined based on a quantity K of antenna groups. K may be a quantity of antenna groups currently configured, or K may be a quantity of antenna groups reported by the terminal device. K may be a positive integer. In some embodiments, the PTRS information may also be determined based on a quantity of PTRS ports. For example, the network device may preconfigure the quantity of PTRS ports based on a current codebook subset configuration or based on a quantity of PTRS ports currently required. In some embodiments, the PTRS information may also be configured based on a codebook subset.

In some embodiments, FIG. 3 may further include step S350.

Step S350: The terminal device transmits the PTRS. Correspondingly, the network device may receive the PTRS.

In some embodiments, the terminal device may determine, based on the DMRS port associated with the PTRS port, one or more of a sequence, a frequency domain resource, and a precoding matrix for the PTRS, and transmit the PTRS.

With reference to embodiments, the following describes how to determine each of the PTRS power boost value information, the PTRS-DMRS port association, and the information length of the PTRS-DMRS port association indication in the DCI, based on the DMRS configuration. It may be understood that the embodiments provided in this application may be separately implemented, or may be implemented in combination.

First, how to determine the PTRS power boost value information based on the DMRS configuration is described.

In some embodiments, in a case that the length of the frequency-domain OCC is 2, the PTRS power boost value information may indicate a PTRS power boost value only for a quantity of transmission layers ranging from 1 to 4, or the PTRS power boost value information may indicate a PTRS power boost value only for a quantity of transmission layers ranging from 1 to 6.

In some embodiments, the PTRS power boost value information may be further determined based on a DMRS type. For example, in a case that the length of the frequency-domain OCC is 2 and the DMRS type is a type 1, the PTRS power boost value information may indicate a PTRS power boost value only for a quantity of transmission layers ranging from 1 to 4. In a case that the length of the frequency-domain OCC is 2 and the DMRS type is a type 2, the PTRS power boost value information may indicate a PTRS power boost value only for a quantity of transmission layers ranging from 1 to 6.

In an example in which the PTRS power boost value information is indicated by a table for PTRS power boost values, in a case that the length of the frequency-domain OCC is 2 and the DMRS type is a type 1, the table for PTRS power boost values may be shown as Table 4. In a case that the length of the frequency-domain OCC is 2 and the DMRS type is a type 2, the table for PTRS power boost values may be shown as Table 5. M in Table 4 and Table 5 indicates a quantity of PTRS ports currently configured. M may be 1 or 2.

Table 4

| Power boosting configuration | Quantity of PUSCH transmission layers | | | | | | | |
| --- | --- | --- | --- | --- | --- | --- | --- | --- |
| | 1 | 2 | | 3 | | 4 | | |
| | All cases | Full coherent codebook | Partial coherent/ non-coherent codebook and non-codebook | Full coherent codebook | Partial coherent/ non-coherent codebook and non-codebook | Full coherent codebook | Partial coherent codebook | Non-coherent codebook and non-codebook |
| 00 | 0 | 3 | 3M-3 | 4.77 | 3M-3 | 6 | 3M | 3M-3 |
| 01 | 0 | 3 | 3 | 4.77 | 4.77 | 6 | 6 | 6 |
| 10 | Reserved | | | | | | | |
| 11 | Reserved | | | | | | | |

Table 5

| Power boosting configuration | Quantity of PUSCH transmission layers | | | | | | | | | | | | | |
| --- | --- | --- | --- | --- | --- | --- | --- | --- | --- | --- | --- | --- | --- | --- |
| | 1 | 2 | | 3 | | 4 | | | 5 | | | 6 | | |
| | All cases | Full coherent codebook | Partial coherent/ non-coherent codebook and non-codebook | Full coherent codebook | Partial coherent/ non-coherent codebook and non-codebook | Full coherent codebook | Partial coherent codebook | Non-coherent codebook and non-codebook | Full coherent codebook | Partial coherent codebook | Non-coherent codebook and non-codebook | Full coherent codebook | Partial coherent codebook | Non-coherent codebook and non-codebook |
| 00 | 0 | 3 | 3M-3 | 4.77 | 3M-3 | 6 | 3M | 3M-3 | 7 | 3M | 3M-3 | 7.78 | 3M+1.7 7 | 3M-3 |
| 01 | 0 | 3 | 3 | 4.77 | 4.77 | 6 | 6 | 6 | 7 | 7 | 7 | 7.78 | 7.78 | 7.78 |
| 10 | Reserved | | | | | | | | | | | | | |
| 11 | Reserved | | | | | | | | | | | | | |

In some embodiments, regardless of whether the DMRS type is the type 1 or the type 2, same PTRS power boost value information is used in a case in which the length of the frequency-domain OCC is 2. For example, in a case in which the length of the frequency-domain OCC is 2, the PTRS power boost value information indicates a PTRS power boost value only for a quantity of transmission layers ranging from 1 to 6. In this case, if the DMRS type is the type 1, only the PTRS power boost value corresponding to the quantity of transmission layers ranging from 1 to 4 in the PTRS power boost value information may be used. The table for PTRS power boost values is still used as an example. In a case in which the length of the frequency-domain OCC is 2, the table for PTRS power boost values may be determined as Table 5.

In some embodiments, the PTRS power boost value information may also be determined based on a quantity K of antenna groups. In other words, when a value of K varies, a PTRS power boost value used may also vary. In Table 4 and Table 5, K = 2. In a case in which the length of the frequency-domain OCC is 2, K may be another value, details are not described in this application for conciseness.

In some embodiments, in a case that the length of the frequency-domain OCC is 4, the PTRS power boost value information may indicate a PTRS power boost value for a quantity of transmission layers ranging from 1 to 8.

In some implementations, when the value of the quantity K of antenna groups varies, the PTRS power boost value information may also vary. In an example in which the PTRS power boost value information is indicated by a table for PTRS power boost values, in a case that the length of the frequency-domain OCC is 4, the table for PTRS power boost values may be shown as Table 6 or Table 7. Table 6 provides an example of K = 2, and Table 7 provides an example of K = 4. M in Table 6 and Table 7 indicates a quantity of PTRS ports currently configured. M may be 1 or 2. Table 6 includes Table 6A and Table 6B, and Table 7 includes Table 7A and Table 7B. In other words, Table 6A and Table 6B need to be used together, and Table 7A and Table 7B need to be used together. Alternatively, Table 6A and Table 6B need to be combined into one table for use, and Table 7A and Table 7B need to be combined into one table for use.

Table 6A

| Power boosting configuration | Quantity of PUSCH transmission layers | | | | | | | |
| | 1 | 2 | | 3 | | 4 | | |
| | All cases | Full coherent codebook | Partial coherent/ non-coherent codebook and non-codebook | Full coherent codebook | Partial coherent/ non-coherent codebook and non-codebook | Full coherent codebook | Partial coherent codebook | Non-coherent codebook and non-codebook |
| 00 | 0 | 3 | 3M-3 | 4.77 | 3M-3 | 6 | 3M | 3M-3 |
| 01 | 0 | 3 | 3 | 4.77 | 4.77 | 6 | 6 | 6 |
| 10 | Reserved | | | | | | | |
| 11 | Reserved | | | | | | | |

Table 6B

| Power boosting configuration | Quantity of PUSCH transmission layers | | | | | | | | | | | |
| --- | --- | --- | --- | --- | --- | --- | --- | --- | --- | --- | --- | --- |
| | 5 | | | 6 | | | 7 | | | 8 | | |
| | Full coherent codebook | Partial coherent codebook | Non-coherent codebook and non-codebook | Full coherent codebook | Partial coherent codebook | Non-coherent codebook and non-codebook | Full coherent codebook | Partial coherent codebook | Non-coherent codebook and non-codebook | Full coherent codebook | Partial coherent codebook | Non-coherent codebook and non-codebook |
| 00 | 7 | 3M | 3M-3 | 7.78 | 3M+1.77 | 3M-3 | 8.45 | 3M+1.77 | 3M-3 | 9 | 3M+3 | 3M-3 |
| 01 | 7 | 7 | 7 | 7.78 | 7.78 | 7.78 | 8.45 | 8.45 | 8.45 | 9 | 9 | 9 |
| 10 | Reserved | | | | | | | | | | | |
| 11 | Reserved | | | | | | | | | | | |

Table 7A

| Power boosting configuration | Quantity of PUSCH transmission layers | | | | | | |
|---|---|---|---|---|---|---|---|
| | 1 | 2 | | 3 | | 4 | |
| | All cases | Full coherent codebook | Partial coherent/non-coherent codebook and non-codebook | Full coherent codebook | Partial coherent/non-coherent codebook and non-codebook | Full coherent codebook | Partial coherent/non-coherent codebook and non-codebook |
| 00 | 0 | 3 | 3M-3 | 4.77 | 3M-3 | 6 | 3M-3 |
| 01 | 0 | 3 | 3 | 4.77 | 4.77 | 6 | 6 |
| 10 | Reserved | | | | | | |
| 11 | Reserved | | | | | | |

Table 7B

| Power boosting configuration | Quantity of PUSCH transmission layers | | | | | | | | |
|---|---|---|---|---|---|---|---|---|---|
| | 5 | | 6 | | 7 | | 8 | | |
| | Full coherent codebook | Partial coherent/ non-coherent codebook and non-codebook | Full coherent codebook | Partial coherent/non-coherent codebook and non-codebook | Full coherent codebook | Partial coherent/non-coherent codebook and non-codebook | Full coherent codebook | Partial coherent codebook | Non-coherent codebook and non-codebook |
| 00 | 7 | 3M-3 | 7.78 | 3M-3 | 8.45 | 3M-3 | 9 | 3M | 3M-3 |
| 01 | 7 | 7 | 7.78 | 7.78 | 8.45 | 8.45 | 9 | 9 | 9 |
| 10 | Reserved | | | | | | | | |
| 11 | Reserved | | | | | | | | |

It should be noted that according to different calculation methods, values in Table 4 to Table 7 may be adjusted. For example, 7.78 may be replaced with 7.77, and 1.77 may be replaced with 1.76 or 1.78. In addition, Table 4 to Table 7 provide only a manner of summarizing expressions of the power boost value information, and actually, another expression manner may be used. Power boost values, corresponding to different transmission layers, obtained in the another expression manner may be the same as values obtained in Table 4 to Table 7.

Based on the foregoing method, the communications device may determine a power boost value for the PTRS port when uplink transmission with eight antenna ports is supported, so as to ensure constant power on different OFDM symbols in different DMRS configurations (meet a hardware implementation requirement of the terminal), and enhance measurement performance on the PTRS port by power boosting.

It should be noted that a power boosting configuration in the PTRS power boost value information may be indicated by the network device by using higher layer signalling. For example, in a case in which the length of the frequency-domain OCC is 2 and the DMRS type is the type 1, the terminal device may determine that the PTRS power boost value information is as shown in Table 4. Further, based on the power boosting configuration indicated by using higher layer signalling and Table 4, the terminal device may determine a corresponding PTRS power boost value.

In some implementations, the terminal device may determine the power boost value for the PTRS port based on the PTRS power boost value information and a current quantity of transmission layers. Further, the terminal device may determine the power boost value from the PTRS power boost value information based on the power boosting configuration indicated by the network device by using higher layer signalling and the current quantity of transmission layers.

In some embodiments, the terminal device may determine a transmit power of a PTRS based on the power boost value for the PTRS port. For example, the terminal device may determine, based on the power boost value and a transmit power of a DMRS, the transmit power of the PTRS or a power difference between the PTRS and the DMRS. In some embodiments, the terminal device may perform downlink phase tracking and channel estimation based on the transmit power of the PTRS or the power difference between the PTRS and the DMRS.

In some implementations, the network device may determine the power boost value for the PTRS port based on the PTRS power boost value information and the current quantity of transmission layers.

In some embodiments, the network device may perform, based on the power boost value for the PTRS port, phase tracking based on a detected PTRS and a detected DMRS. For example, the network device may perform, based on the power boost value, power or amplitude adjustment on channel information detected on the PTRS port, and perform phase tracking based on channel information detected on a DMRS port. In an example in which the power boost value is 3 dB, the network device may reduce, by 3 dB, a power of the channel information detected on the PTRS port, so as to be used for phase tracking.

The following describes how to determine the PTRS-DMRS port association and/or the information length of the PTRS-DMRS port association indication in the DCI based on the DMRS configuration according to embodiments of this application. It should be noted that the communications device may determine both the PTRS-DMRS port association and the information length of the PTRS-DMRS port association indication in the DCI, or may determine only one of the PTRS-DMRS port association and the information length of the PTRS-DMRS port association indication in the DCI.

During determination of the information length of the PTRS-DMRS port association indication in the DCI, the terminal device may determine a size of the DCI based on a maximum information length in information lengths corresponding to different frequency-domain OCC lengths, so as to detect the DCI. For example, if the OCC length of 2 corresponds to the information length of two bits and if the OCC length of 4 corresponds to the information length of four bits, it needs to assume the information length to be four bits before the terminal device detects the DCI, so that a total length of the DCI is determined, thereby accurately detecting the DCI.

A case in which the quantity of PTRS ports is 1 and a case in which the quantity of PTRS ports is 2 are described repectively below.

The quantity of PTRS ports is 1

In some implementations, if the quantity of PTRS ports configured by the network device is 1, for example, when the current codebook subset configuration is a full coherent codebook, the information length of the PTRS-DMRS port association indication and the corresponding PTRS-DMRS port association may be determined according to the following method.

When the length of the frequency-domain OCC is 2, the information length of the PTRS-DMRS port association indication may be two bits, and the PTRS-DMRS port association may include a correspondence between the PTRS port and DMRS port association indication in the DCI and candidate four DMRS ports association with the PTRS port. Alternatively, the information length of the PTRS-DMRS port association indication is three bits, and the PTRS-DMRS port association may include a correspondence between the PTRS port and DMRS port association indication in the DCI and candidate six DMRS ports association with the PTRS port.

In an implementation, the communications device may further determine the information length and the corresponding PTRS-DMRS port association based on the DMRS type. For example, when the DMRS type is the type 1, the information length of the PTRS-DMRS port association indication may be two bits, and the PTRS-DMRS port association may include a correspondence between the PTRS port and DMRS port association indication and candidate four DMRS ports association with the PTRS port. In this case, the PTRS-DMRS port association may be, for example, shown by Table 8. When the DMRS type is the type 2, the information length of the PTRS-DMRS port association indication may be three bits, and the PTRS-DMRS port association may include a correspondence between the PTRS-DMRS port association indication and candidate six DMRS ports association with the PTRS port. In this case, the PTRS-DMRS port association may be, for example, shown by Table 9.

In another implementation, regardless of whether the DMRS type is the type 1 or the type 2, a same PTRS-DMRS port association may be used as long as the length of the frequency-domain OCC is 2. For example, in a case in which the length of the frequency-domain OCC is 2, the PTRS-DMRS port association may include a correspondence between the PTRS-DMRS port association indication in the DCI and candidate six DMRS ports association with the PTRS port. In this case, the PTRS-DMRS port association may be shown by Table 9. It should be noted that, if the DMRS type is the type 1, only first four DMRS ports (for example, first four rows in Table 9) in the PTRS-DMRS port association may be used.

Table 8

| PTRS-DMRS port association indication value | DMRS port |
|---|---|
| 0 | First scheduled DMRS port (1st scheduled DMRS port) |
| 1 | Second scheduled DMRS port (2nd scheduled DMRS port) |
| 2 | Third scheduled DMRS port (3rd scheduled DMRS port) |
| 3 | Fourth scheduled DMRS port (4th scheduled DMRS port) |

Table 9

| PTRS-DMRS port association indication value | DMRS port |
|---|---|
| 0 | First scheduled DMRS port (1st scheduled DMRS port) |
| 1 | Second scheduled DMRS port (2nd scheduled DMRS port) |
| 2 | Third scheduled DMRS port (3rd scheduled DMRS port) |
| 3 | Fourth scheduled DMRS port (4th scheduled DMRS port) |
| 4 | Fifth scheduled DMRS port (5th scheduled DMRS port) |
| 5 | Sixth scheduled DMRS port (6th scheduled DMRS port) |
| 6-7 | Reserved (Reserved) |

In a case that the length of the frequency-domain OCC is 4, the information length of the PTRS-DMRS port association indication may be three bits, and the PTRS-DMRS port association may include a correspondence between the PTRS-DMRS port association indication and candidate eight DMRS ports association with the PTRS port. In this case, the PTRS-DMRS port association may be shown by Table 10.

Table 10

| PTRS-DMRS port association indication value | DMRS port |
|---|---|
| 0 | First scheduled DMRS port (1st scheduled DMRS port) |
| 1 | Second scheduled DMRS port (2nd scheduled DMRS port) |
| 2 | Third scheduled DMRS port (3rd scheduled DMRS port) |
| 3 | Fourth scheduled DMRS port (4th scheduled DMRS port) |
| 4 | Fifth scheduled DMRS port (5th scheduled DMRS port) |
| 5 | Sixth scheduled DMRS port (6th scheduled DMRS port) |
| 6 | Seventh scheduled DMRS port (7th scheduled DMRS port) |

(continued)

| PTRS-DMRS port association indication value | DMRS port |
|---|---|
| 7 | Eighth scheduled DMRS port (8th scheduled DMRS port) |

In a case that the length of the frequency-domain OCC is 4, the information length of the PTRS-DMRS port association indication may be two bits, and the PTRS-DMRS port association may include a correspondence between the PTRS-DMRS port association indication and candidate four DMRS ports association with the PTRS port. The four DMRS ports may correspond to a same codeword. For example, if a current quantity of codewords is 2, the four DMRS ports may correspond to a codeword with a higher modulation and coding scheme (modulation and coding scheme, MCS). In this case, the PTRS-DMRS port association may be shown by Table 11. If MCSs of two codewords are the same, the four DMRS ports may correspond to the first codeword.

Table 11

| PTRS-DMRS port association indication value | DMRS port |
|---|---|
| 0 | First scheduled DMRS port corresponding to a codeword with a higher MCS (1st scheduled DMRS port associated with the codeword with higher MCS) |
| 1 | Second scheduled DMRS port corresponding to a codeword with a higher MCS (2nd scheduled DMRS port associated with the codeword with higher MCS) |
| 2 | Third scheduled DMRS port corresponding to a codeword with a higher MCS (3rd scheduled DMRS port associated with the codeword with higher MCS) |
| 3 | Fourth scheduled DMRS port corresponding to a codeword with a higher MCS (4th scheduled DMRS port associated with the codeword with higher MCS) |

In a case in which the length of the frequency-domain OCC is 4, a quantity of DMRS ports in candidate association with the PTRS port may be determined based on higher layer signalling. In other words, whether the PTRS-DMRS port association includes a correspondence between the PTRS-DMRS port association indication and candidate eight or four DMRS ports association with the PTRS port, may be determined based on higher layer signalling; and/or whether the information length of the PTRS-DMRS port association indication is two bits or three bits is determined based on higher layer signalling.

In some embodiments, the higher layer signalling may be PTRS and DMRS association indication information (PTRS-DMRS association indication information for short) or indication information that enables 8-layer uplink transmission. For example, the PTRS-DMRS association indication information of one bit may be used to indicate whether Table 10 or Table 11 is used. For another example, if 8-layer uplink transmission is enabled, Table 10 is used; otherwise, Table 8 or Table 9 is used.

The quantity of PTRS ports is 2

If the quantity of PTRS ports configured by the network device is 2, for example, when the current codebook subset configuration is a partial coherent or non-coherent codebook, the information length of the PTRS-DMRS port association indication and the corresponding PTRS-DMRS port association may be determined according to the following method.

In some embodiments, when the length of the frequency-domain OCC is 2, the information length of the PTRS-DMRS port association indication may be two bits, and the PTRS-DMRS port association may include a correspondence between the PTRS-DMRS port association indication and candidate two DMRS ports association with each PTRS port. In this case, the PTRS-DMRS port association may be shown by Table 12.

In the tables described in this application, the LSB may indicate a lower-order bit in the bits for the PTRS-DMRS port association indication; and the MSB may indicate a higher-order bit in the bits for the PTRS-DMRS port association indication.

Table 12

| Value of the MSB (Value of MSB) | DMRS port (DMRS port) | | Value of the LSB (Value of LSB) | DMRS port (DMRS port) |
|---|---|---|---|---|
| 0 | First DMRS port which shares a PTRS port 0 (1st DMRS port which shares PTRS port 0) | | 0 | First DMRS port which shares a PTRS port 1 (1st DMRS port which shares PTRS port 1) |
| 1 | Second DMRS port which shares a PTRS port 0 (2nd DMRS port which shares PTRS port 0) | | 1 | Second DMRS port which shares a PTRS port 1 (2nd DMRS port which shares PTRS port 1) |

In some embodiments, when the length of the frequency-domain OCC is 2, the information length of the PTRS-DMRS port association indication may be four bits, and the PTRS-DMRS port association may include a correspondence between the PTRS-DMRS port association indication and candidate three DMRS ports association with each PTRS port. In this case, the PTRS-DMRS port association may be shown by Table 13.

Table 13

| Value of the MSB (Value of MSB) | DMRS port (DMRS port) | | Value of the LSB (Value of LSB) | DMRS port (DMRS port) |
|---|---|---|---|---|
| 0 | First DMRS port which shares a PTRS port 0 (1st DMRS port which shares PTRS port 0) | | 0 | First DMRS port which shares a PTRS port 1 (1st DMRS port which shares PTRS port 1) |
| 1 | Second DMRS port which shares a PTRS port 0 (2nd DMRS port which shares PTRS port 0) | | 1 | Second DMRS port which shares a PTRS port 1 (2nd DMRS port which shares PTRS port 1) |
| 2 | Third DMRS port which shares a PTRS port 0 (3rd DMRS port which shares PTRS port 0) | | 2 | Third DMRS port which shares a PTRS port 1 (3rd DMRS port which shares PTRS port 1) |

In an implementation, when the length of the frequency-domain OCC is 2, the communications device may further determine the information length and the corresponding PTRS-DMRS port association based on the DMRS type. For example, when the DMRS type is the type 1, the information length of the PTRS-DMRS port association indication may be two bits, and the PTRS-DMRS port association may include a correspondence between the PTRS-DMRS port association indication and candidate two DMRS ports association with each PTRS port. In this case, the PTRS-DMRS port association may be shown by Table 12. In this case, the information of two bits may be used to indicate DMRS ports associated with different PTRS ports, respectively. When the DMRS type is the type 2, the information length of the PTRS-DMRS port association indication may be four bits, and the PTRS-DMRS port association may include a correspondence between the PTRS-DMRS port association indication and candidate three DMRS ports association with each PTRS port. In this case, the PTRS-DMRS port association may be shown by Table 13. In this case, the first two bits and the last two bits in the four bits may be used to indicate DMRS ports associated with different PTRS ports, respectively.

In another implementation, regardless of whether the DMRS type is the type 1 or the type 2, a same information length of PTRS-DMRS port association indication and a same PTRS-DMRS port association may be used as long as the length of the frequency-domain OCC is 2. In this case, the PTRS-DMRS port association may be shown by Table 13. In this case, if the DMRS type is the type 1, the communications device may use only first several states in the PTRS-DMRS port association, that is, one DMRS port is indicated from two DMRS ports possibly associated with each PTRS port.

In some implementations, when the length of the frequency-domain OCC is 4, the information length may be $2*\log2(N/2)$ bits, and the PTRS-DMRS port association may include a correspondence between the PTRS-DMRS port association indication and candidate N/2 DMRS ports association with each PTRS port. N denotes a maximum quantity of transmission layers currently supported for uplink, and a value of N is 4 or 8. The value of N may be configured by the network device by using higher layer signalling, the value of N may be determined based on capability reporting of the terminal device, or the value of N may be fixed as 8. In a case in which the value of N is 8 and the length of the frequency-domain OCC is 4, the PTRS-DMRS port association may be shown by Table 14.

In an implementation, when the value of N is 4, Table 12 may be used to indicate the PTRS-DMRS port association. When the value of N is 8, Table 14 may be used to indicate the PTRS-DMRS port association.

In some embodiments, in the information of 2*log2(N/2) bits, the first log2(N)/2 bits may be used to indicate a DMRS port associated with the first PTRS port (PTRS port 0), and the last log2(N)/2 bits may be used to indicate a DMRS port associated with the second PTRS port (PTRS port 1). Alternatively, the first log2(N)/2 bits may be used to indicate a DMRS port associated with the second PTRS port (PTRS port 1), and the last log2(N)/2 bits may be used to indicate a DMRS port associated with the first PTRS port (PTRS port 0).

Table 14

| Value of the MSB (Value of MSB) | DMRS port (DMRS port) | | Value of the LSB (Value of LSB) | DMRS port (DMRS port) |
|---|---|---|---|---|
| 0 | First DMRS port which shares a PTRS port 0 (1st DMRS port which shares PTRS port 0) | | 0 | First DMRS port which shares a PTRS port 1 (1st DMRS port which shares PTRS port 1) |
| 1 | Second DMRS port which shares a PTRS port 0 (2nd DMRS port which shares PTRS port 0) | | 1 | Second DMRS port which shares a PTRS port 1 (2nd DMRS port which shares PTRS port 1) |
| 2 | Third DMRS port which shares a PTRS port 0 (3rd DMRS port which shares PTRS port 0) | | 2 | Third DMRS port which shares a PTRS port 1 (3rd DMRS port which shares PTRS port 1) |
| 3 | Fourth DMRS port which shares a PTRS port 0 (4th DMRS port which shares PTRS port 0) | | 3 | Fourth DMRS port which shares a PTRS port 1 (4th DMRS port which shares PTRS port 1) |

In some embodiments, in a case in which the information length is determined, the terminal device may obtain the corresponding PTRS-DMRS port association indication from the DCI based on the information length.

In some embodiments, the terminal device may determine, based on the PTRS-DMRS port association and the PTRS-DMRS port association indication, a DMRS port associated with the PTRS port.

In some embodiments, the terminal device determines, based on the DMRS port associated with the PTRS port, a sequence, a frequency domain resource, and a precoding matrix for the PTRS, and transmits the PTRS. In some implementations, a same sequence, a same frequency domain resource, and a same precoding matrix may be used for the DMRS port associated with the PTRS port.

In some embodiments, the network device may determine, based on the DMRS port associated with the PTRS port, a sequence and a frequency domain resource for the PTRS, and receive the PTRS.

It should be noted that Table 4 to Table 14 are merely an implementation provided in embodiments of this application, and an implementation of the tables and specific values in the tables may be adjusted according to an actual situation, which is not limited in this application.

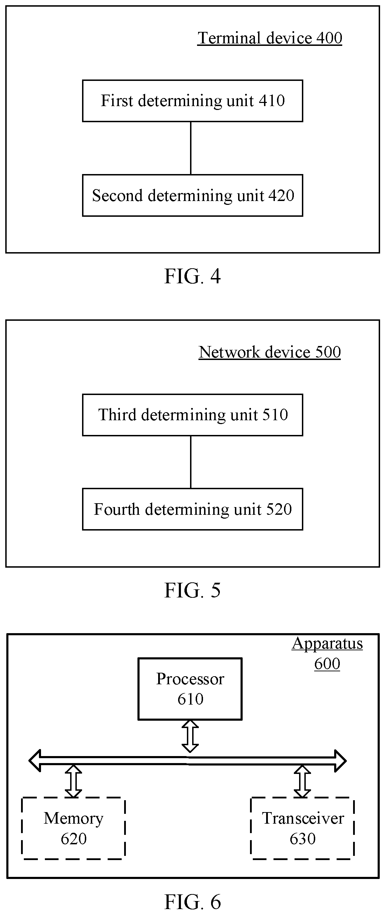

The method embodiments of this application are described in detail above. Apparatus embodiments of this application are described below in detail with reference to FIG. 4 to FIG. 6. It should be understood that the description of the method embodiments corresponds to the description of the apparatus embodiments, and therefore, for parts that are not described in detail, reference may be made to the foregoing method embodiments.

FIG. 4 is a schematic structural diagram of a terminal device 400 according to an embodiment of this application. The terminal device 400 may include a first determining unit 410 and a second determining unit 420.

The first determining unit 410 is configured to determine PTRS information based on a DMRS configuration. The second determining unit 420 is configured to determine a transmission parameter of a PTRS based on the PTRS information. The PTRS information includes one or more of following information: PTRS power boost value information, a PTRS port and DMRS port association, or an information length of a PTRS port and DMRS port association indication in DCI. The DMRS configuration includes a length of a frequency-domain orthogonal cover code OCC.

In some embodiments, the DMRS configuration further includes a DMRS type.

In some embodiments, in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6. In a case that the length of the frequency-domain OCC is 4, the PTRS power boost value information indicates a PTRS power boost value for a quantity of transmission layers ranging from 1 to 8.

In some embodiments, in a case that the length of the frequency-domain OCC is 2 and a DMRS type is a type 1, the PTRS power boost value information indicates a PTRS power boost value only for a quantity of transmission layers ranging from 1 to 4. In a case that the length of the frequency-domain OCC is 2 and the DMRS type is a type 2, the PTRS power boost value information indicates a PTRS power boost value only for a quantity of transmission layers ranging from 1 to 6.

In some embodiments, in a case in which a quantity of PTRS ports is 1 and in a case that the length of the frequency-domain OCC is 2, the PTRS port and DMRS port association includes a correspondence between the PTRS port and DMRS port association indication in the DCI and candidate four or six DMRS ports association with the PTRS port. In a case in which a quantity of PTRS ports is 1 and in a case that the length of the frequency-domain OCC is 4, the PTRS port and DMRS port association includes a correspondence between the PTRS port and DMRS port association indication and candidate eight or four DMRS ports association with the PTRS port. Four DMRS ports of the eight or four DMRS ports correspond to a same codeword.

In some embodiments, in a case that the length of the frequency-domain OCC is 2 and a DMRS type is a type 1, the PTRS port and DMRS port association includes a correspondence between the PTRS port and DMRS port association indication and candidate four DMRS ports association with the PTRS port. In a case that the length of the frequency-domain OCC is 2 and a DMRS type is a type 2, the PTRS port and DMRS port association includes a correspondence between six DMRS ports in candidate association with the PTRS port, which is indicted by the PTRS port and DMRS port association indication.

In some embodiments, in a case that the length of the frequency-domain OCC is 4, a quantity of DMRS ports in candidate association with the PTRS port is determined based on higher layer signalling.

In some embodiments, in a case in which a quantity of PTRS ports is 2 and in a case that the length of the frequency-domain OCC is 2, the PTRS port and DMRS port association includes a correspondence between the PTRS port and DMRS port association indication in the DCI and candidate two or three DMRS ports association with the PTRS ports. In a case in which a quantity of PTRS ports is 2 and in a case that the length of the frequency-domain OCC is 4, the PTRS port and DMRS port association includes a correspondence between the PTRS port and DMRS port association indication and candidate N/2 DMRS ports association with the PTRS port, where N denotes a maximum quantity of transmission layers currently supported for uplink, and a value of N is 4 or 8.

In some embodiments, in a case that the length of the frequency-domain OCC is 2 and a DMRS type is a type 1, the PTRS port and DMRS port association includes a correspondence between the PTRS port and DMRS port association indication and candidate two DMRS ports association with the PTRS port. In a case that the length of the frequency-domain OCC is 2 and a DMRS type is a type 2, the PTRS port and DMRS port association includes a correspondence between the PTRS port and DMRS port association indication and three candidate DMRS ports association with the PTRS port.

In some embodiments, in a case in which a quantity of PTRS ports is 1 and in a case that the length of the frequency-domain OCC is 2 and a DMRS type is a type 1, the information length is two bits. In a case in which a quantity of PTRS ports is 1 and in a case that the length of the frequency-domain OCC is 2 and the DMRS type is a type 2, the information length is three bits. In a case in which a quantity of PTRS ports is 1 and in a case that the length of the frequency-domain OCC is 4, the information length is two bits, or the information length is three bits.

In some embodiments, in a case that the length of the frequency-domain OCC is 4, the information length is determined based on higher layer signalling.

In some embodiments, the higher layer signalling is PTRS and DMRS association indication information or indication information that enables 8-layer uplink transmission.

In some embodiments, in a case in which a quantity of PTRS ports is 2 and in a case that the length of the frequency-domain OCC is 2 and a DMRS type is a type 1, the information length is two bits. In a case in which a quantity of PTRS ports is 2 and in a case that the length of the frequency-domain OCC is 2 and the DMRS type is a type 2, the information length is four bits. In a case in which a quantity of PTRS ports is 2 and in a case that the length of the frequency-domain OCC is 4, the information length is $2*\log 2(N/2)$ bits, where N denotes a maximum quantity of transmission layers currently supported for uplink, and a value of N is 4 or 8.

In some embodiments, the second determining unit is specifically configured to perform one or more of following: determining a power boost value for a PTRS port based on the PTRS power boost value information and a current quantity of transmission layers, where the power boost value is used to determine a transmit power of the PTRS; determining, based on the PTRS port and DMRS port association and the PTRS port and DMRS port association indication in the DCI, a DMRS port associated with the PTRS port; and determining, based on the information length of the PTRS port and DMRS port association indication, the PTRS port and DMRS port association indication in the DCI, where the PTRS port and DMRS port association indication is used to determine a DMRS port associated with the PTRS port.

In some embodiments, the terminal device 400 further includes: a transmitting unit, configured to determine, based on the DMRS port associated with the PTRS port, a sequence, a frequency domain resource, and a precoding matrix for the PTRS, and transmit the PTRS.

In some embodiments, the PTRS power boost value information is represented by using a table; and/or the PTRS port and DMRS port association is represented by using a table.

FIG. 5 is a schematic structural diagram of a network device 500 according to an embodiment of this application. The network device 500 includes a third determining unit 510 and a fourth determining unit 520.

The third determining unit 510 is configured to determine phase tracking reference signal PTRS information based on a demodulation reference signal DMRS configuration. The fourth determining unit 520 is configured to determine a transmission parameter of a PTRS based on the PTRS information. The PTRS information includes one or more of following information: PTRS power boost value information, a PTRS port and DMRS port association, and an information length of a PTRS port and DMRS port association indication in downlink control information DCI. The DMRS configuration includes a length of a frequency-domain orthogonal cover code OCC.

In some embodiments, the DMRS configuration further includes a DMRS type.

In some embodiments, in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6. In a case that the length of the frequency-domain OCC is 4, the PTRS power boost value information indicates a PTRS power boost value for a quantity of transmission layers ranging from 1 to 8.

In some embodiments, in a case that the length of the frequency-domain OCC is 2 and a DMRS type is a type 1, the PTRS power boost value information indicates a PTRS power boost value only for a quantity of transmission layers ranging from 1 to 4. In a case that the length of the frequency-domain OCC is 2 and the DMRS type is a type 2, the PTRS power boost value information indicates a PTRS power boost value only for a quantity of transmission layers ranging from 1 to 6.

In some embodiments, in a case in which a quantity of PTRS ports is 1 and in a case that the length of the frequency-domain OCC is 2, the PTRS port and DMRS port association includes a correspondence between the PTRS port and DMRS port association indication in the DCI and candidate four or six DMRS ports association with the PTRS port. In a case that the length of the frequency-domain OCC is 4, the PTRS port and DMRS port association includes a correspondence between eight or four DMRS ports in candidate association with the PTRS port, whch is indicated by the PTRS port and DMRS port association indication. Four DMRS ports of the eight or four DMRS ports correspond to a same codeword.

In some embodiments, in a case that the length of the frequency-domain OCC is 2 and a DMRS type is a type 1, the PTRS port and DMRS port association includes a correspondence between the PTRS port and DMRS port association indication and candidate four DMRS ports association with the PTRS port. In a case that the length of the frequency-domain OCC is 2 and a DMRS type is a type 2, the PTRS port and DMRS port association includes a correspondence between the PTRS port and DMRS port association indication and candidate six DMRS ports association with the PTRS port.

In some embodiments, in a case that the length of the frequency-domain OCC is 4, a quantity of DMRS ports in candidate association with the PTRS port is determined based on higher layer signalling.

In some embodiments, in a case in which a quantity of PTRS ports is 2 and in a case that the length of the frequency-domain OCC is 2, the PTRS port and DMRS port association includes a correspondence between the PTRS port and DMRS port association indication in the DCI and candidate two or three DMRS ports association with the PTRS ports. In a case in which a quantity of PTRS ports is 2 and in a case that the length of the frequency-domain OCC is 4, the PTRS port and DMRS port association includes a correspondence between the PTRS port and DMRS port association indication and candidate $N/2$ DMRS ports association with the PTRS port, where $N$ denotes a maximum quantity of transmission layers currently supported for uplink, and a value of $N$ is 4 or 8.

In some embodiments, in a case that the length of the frequency-domain OCC is 2 and a DMRS type is a type 1, the PTRS port and DMRS port association includes a correspondence between the PTRS port and DMRS port association indication and candidate two DMRS ports association with the PTRS port. In a case that the length of the frequency-domain OCC is 2 and a DMRS type is a type 2, the PTRS port and DMRS port association includes a correspondence between the PTRS port and DMRS port association indication and candidate three DMRS ports association with the PTRS port.

In some embodiments, in a case in which a quantity of PTRS ports is 1 and in a case that the length of the frequency-domain OCC is 2 and a DMRS type is a type 1, the information length is two bits. In a case in which a quantity of PTRS ports is 1 and in a case that the length of the frequency-domain OCC is 2 and the DMRS type is a type 2, the information length is three bits. In a case in which a quantity of PTRS ports is 1 and in a case that the length of the frequency-domain OCC is 4, the information length is two bits, or the information length is three bits.

In some embodiments, in a case that the length of the frequency-domain OCC is 4, the information length is determined based on higher layer signalling.

In some embodiments, the higher layer signalling is PTRS and DMRS association indication information or indication information that enables 8-layer uplink transmission.

In some embodiments, in a case in which a quantity of PTRS ports is 2 and in a case that the length of the frequency-domain OCC is 2 and a DMRS type is a type 1, the information length is two bits. In a case in which a quantity of PTRS ports is 2 and in a case that the length of the frequency-domain OCC is 2 and the DMRS type is a type 2, the information length is four bits. In a case in which a quantity of PTRS ports is 2 and in a case that the length of the frequency-domain OCC is 4, the information length is $2*log2(N/2)$ bits, where N denotes a maximum quantity of transmission layers currently supported for uplink, and a value of N is 4 or 8.

In some embodiments, the fourth determining unit is specifically configured to perform one or more of following: determining a power boost value for a PTRS port based on the PTRS power boost value information and a current quantity of transmission layers, where the power boost value is used to determine a transmit power of the PTRS; determining, based on the PTRS port and DMRS port association and the PTRS port and DMRS port association indication in the DCI, a DMRS port associated with the PTRS port; and determining, based on the information length of the PTRS port and DMRS port association indication, the PTRS port and DMRS port association indication in the DCI, where the PTRS port and DMRS port association indication is used to determine a DMRS port associated with the PTRS port.

In some embodiments, the network device 500 further includes: a phase tracking unit, configured to perform phase tracking based on the power boost value for the PTRS port and a detected PTRS and a detected DMRS.

In some embodiments, the PTRS power boost value information is represented by using a table; and/or the PTRS port and DMRS port association is represented by using a table.

In an optional embodiment, the transmitting unit may be a transceiver 630, and the first determining unit 410, the second determining unit 420, the third determining unit 430, or the fourth determining unit may be a processor 610. The terminal device 400 or the network device 500 may further include a memory 620, which is specifically shown in FIG. 6.

FIG. 6 is a schematic structural diagram of an apparatus for communication according to an embodiment of this application. Dashed lines in FIG. 6 indicate that the unit or module is optional. The apparatus 600 may be configured to implement the methods described in the foregoing method embodiments. The apparatus 600 may be a chip, a terminal device, or a network device.

The apparatus 600 may include one or more processors 610. The processor 610 may support the apparatus 600 in implementing the methods described in the foregoing method embodiments. The processor 610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The apparatus 600 may further include one or more memories 620. The memory 620 stores a program. The program may be executed by the processor 610, so that the processor 610 performs the methods described in the foregoing method embodiments. The memory 620 may be separate from the processor 610 or may be integrated into the processor 610.

The apparatus 600 may further include a transceiver 630. The processor 610 may communicate with another device or chip by using the transceiver 630. For example, the processor 610 may transmit data to and receive data from another device or chip by using the transceiver 630.

An embodiment of this application further provides a computer-readable storage medium, configured to store a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of the application, "indicate" mentioned herein may refer to a direct indication, or may refer to an indirect indication, or may mean that there is an association. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, predefined may indicate being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

**Claims**

**1.** A communication method, comprising:

determining, by a terminal device, phase tracking reference signal PTRS information based on a demodulation reference signal DMRS configuration; and

determining, by the terminal device, a transmission parameter of a PTRS based on the PTRS information, wherein the PTRS information comprises one or more of following information: PTRS power boost value information, a PTRS port and DMRS port association, or an information length of a PTRS port and DMRS port association indication in downlink control information DCI,

wherein the DMRS configuration comprises a length of a frequency-domain orthogonal cover code OCC.

2. The method according to claim 1, wherein the DMRS configuration further comprises a DMRS type.

3. The method according to claim 1 or 2, wherein

in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6; and

in a case that the length of the frequency-domain OCC is 4, the PTRS power boost value information indicates a PTRS power boost value for a quantity of transmission layers ranging from 1 to 8.

4. The method according to claim 3, wherein

in a case that the length of the frequency-domain OCC is 2 and a DMRS type is a type 1, the PTRS power boost value information indicates a PTRS power boost value only for a quantity of transmission layers ranging from 1 to 4; and

in a case that the length of the frequency-domain OCC is 2 and the DMRS type is a type 2, the PTRS power boost value information indicates a PTRS power boost value only for a quantity of transmission layers ranging from 1 to 6.

5. The method according to any one of claims 1 to 4, wherein in a case in which a quantity of PTRS ports is 1,

in a case that the length of the frequency-domain OCC is 2, the PTRS port and DMRS port association comprises a correspondence between four or six DMRS ports in candidate association with the PTRS port, which is indicated by the PTRS port and DMRS port association indication in the DCI; and

in a case that the length of the frequency-domain OCC is 4, the PTRS port and DMRS port association comprises a correspondence between eight or four DMRS ports in candidate association with the PTRS port, which is indicated by the PTRS port and DMRS port association indication, wherein four DMRS ports of the eight or four DMRS ports correspond to a same codeword.

6. The method according to claim 5, wherein

in a case that the length of the frequency-domain OCC is 2 and a DMRS type is a type 1, the PTRS port and DMRS port association comprises a correspondence between four DMRS ports in candidate association with the PTRS port, which is indicated by the PTRS port and DMRS port association indication; and

in a case that the length of the frequency-domain OCC is 2 and a DMRS type is a type 2, the PTRS port and DMRS port association comprises a correspondence between the six DMRS ports in candidate association with the PTRS port, which is indicated by the PTRS port and DMRS port association indication.

7. The method according to claim 5, wherein

in a case that the length of the frequency-domain OCC is 4, a quantity of DMRS ports in candidate association with the PTRS port is determined based on higher layer signalling.

8. The method according to any one of claims 1 to 4, wherein in a case in which a quantity of PTRS ports is 2,

in a case that the length of the frequency-domain OCC is 2, the PTRS port and DMRS port association comprises a correspondence between two or three DMRS ports in candidate association with the PTRS port, which is indicated by the PTRS port and DMRS port association indication in the DCI; and

in a case that the length of the frequency-domain OCC is 4, the PTRS port and DMRS port association comprises a correspondence between N/2 DMRS ports in candidate association with the PTRS port, which is indicated by the PTRS port and DMRS port association indication, wherein N denotes a maximum quantity of transmission layers currently supported for uplink, and a value of N is 4 or 8.

9. The method according to claim 8, wherein

in a case that the length of the frequency-domain OCC is 2 and a DMRS type is a type 1, the PTRS port and DMRS port association comprises a correspondence between two DMRS ports in candidate association with the PTRS port, which is indicated by the PTRS port and DMRS port association indication; and
in a case that the length of the frequency-domain OCC is 2 and a DMRS type is a type 2, the PTRS port and DMRS port association comprises a correspondence between three DMRS ports in candidate association with the PTRS port, which is indicated by the PTRS port and DMRS port association indication.

10. The method according to any one of claims 1 to 9, wherein in a case in which a quantity of PTRS ports is 1,

in a case that the length of the frequency-domain OCC is 2 and a DMRS type is a type 1, the information length is two bits;
in a case that the length of the frequency-domain OCC is 2 and the DMRS type is a type 2, the information length is three bits; and
in a case that the length of the frequency-domain OCC is 4, the information length is two bits, or the information length is three bits.

11. The method according to claim 10, wherein
in a case that the length of the frequency-domain OCC is 4, the information length is determined based on higher layer signalling.

12. The method according to claim 7 or 11, wherein the higher layer signalling is PTRS and DMRS association indication information or indication information that enables 8-layer uplink transmission.

13. The method according to any one of claims 1 to 9, wherein in a case in which a quantity of PTRS ports is 2,

in a case that the length of the frequency-domain OCC is 2 and a DMRS type is a type 1, the information length is two bits;
in a case that the length of the frequency-domain OCC is 2 and the DMRS type is a type 2, the information length is four bits; and
in a case that the length of the frequency-domain OCC is 4, the information length is $2*\log2(N/2)$ bits, wherein N denotes a maximum quantity of transmission layers currently supported for uplink, and a value of N is 4 or 8.

14. The method according to any one of claims 1 to 13, wherein the determining, by the terminal device, a transmission parameter of a PTRS based on the PTRS information comprises one or more of following:

determining, by the terminal device, a power boost value for a PTRS port based on the PTRS power boost value information and a current quantity of transmission layers, wherein the power boost value is used to determine a transmit power of the PTRS;
determining, by the terminal device based on the PTRS port and DMRS port association and the PTRS port and DMRS port association indication in the DCI, a DMRS port associated with the PTRS port; and
determining, by the terminal device based on the information length of the PTRS port and DMRS port association indication, the PTRS port and DMRS port association indication in the DCI, wherein the PTRS port and DMRS port association indication is used to determine a DMRS port associated with the PTRS port.

15. The method according to claim 14, further comprising:
determining, by the terminal device based on the DMRS port associated with the PTRS port, a sequence, a frequency domain resource, and a precoding matrix for the PTRS, and transmitting, by the terminal device, the PTRS.

16. The method according to any one of claims 1 to 15, wherein

the PTRS power boost value information is represented by using a table; and/or
the PTRS port and DMRS port association is represented by using a table.

**17.** A communication method, comprising:

determining, by a network device, phase tracking reference signal PTRS information based on a demodulation reference signal DMRS configuration; and

determining, by the network device, a transmission parameter of a PTRS based on the PTRS information, wherein the PTRS information comprises one or more of following information: PTRS power boost value information, a PTRS port and DMRS port association, and an information length of a PTRS port and DMRS port association indication in downlink control information DCI,

wherein the DMRS configuration comprises a length of a frequency-domain orthogonal cover code OCC.

**18.** The method according to claim 17, wherein the DMRS configuration further comprises a DMRS type.

**19.** The method according to claim 17 or 18, wherein

in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6; and

in a case that the length of the frequency-domain OCC is 4, the PTRS power boost value information indicates a PTRS power boost value for a quantity of transmission layers ranging from 1 to 8.

**20.** The method according to claim 19, wherein

in a case that the length of the frequency-domain OCC is 2 and a DMRS type is a type 1, the PTRS power boost value information indicates a PTRS power boost value only for a quantity of transmission layers ranging from 1 to 4; and

in a case that the length of the frequency-domain OCC is 2 and the DMRS type is a type 2, the PTRS power boost value information indicates a PTRS power boost value only for a quantity of transmission layers ranging from 1 to 6.

**21.** The method according to any one of claims 17 to 20, wherein in a case in which a quantity of PTRS ports is 1,

in a case that the length of the frequency-domain OCC is 2, the PTRS port and DMRS port association comprises a correspondence between four or six DMRS ports in candidate association with the PTRS port, which is indicated by the PTRS port and DMRS port association indication in the DCI; and

in a case that the length of the frequency-domain OCC is 4, the PTRS port and DMRS port association comprises a correspondence between eight or four DMRS ports in candidate association with the PTRS port, which is indicated by the PTRS port and DMRS port association indication, wherein four DMRS ports of the eight or four DMRS ports correspond to a same codeword.

**22.** The method according to claim 21, wherein

in a case that the length of the frequency-domain OCC is 2 and a DMRS type is a type 1, the PTRS port and DMRS port association comprises a correspondence between four DMRS ports in candidate association with the PTRS port, which is indicated by the PTRS port and DMRS port association indication; and

in a case that the length of the frequency-domain OCC is 2 and a DMRS type is a type 2, the PTRS port and DMRS port association comprises a correspondence between six DMRS ports in candidate association with the PTRS port, which is indicated by the PTRS port and DMRS port association indication.

**23.** The method according to claim 21, wherein
in a case that the length of the frequency-domain OCC is 4, a quantity of DMRS ports in candidate association with the PTRS is determined based on higher layer signalling.

**24.** The method according to any one of claims 17 to 20, wherein in a case in which a quantity of PTRS ports is 2,

in a case that the length of the frequency-domain OCC is 2, the PTRS port and DMRS port association comprises a correspondence between two or three DMRS ports in candidate association with the PTRS port, which is indicated by the PTRS port and DMRS port association indication in the DCI; and

in a case that the length of the frequency-domain OCC is 4, the PTRS port and DMRS port association comprises a correspondence between N/2 DMRS ports in candidate association with the PTRS port, which is indicated the PTRS port and DMRS port association indication, wherein N denotes a maximum quantity of transmission layers currently supported for uplink, and a value of N is 4 or 8.

25. The method according to claim 24, wherein

in a case that the length of the frequency-domain OCC is 2 and a DMRS type is a type 1, the PTRS port and DMRS port association comprises a correspondence between two DMRS ports in candidate association with the PTRS port, which is indicated by the PTRS port and DMRS port association indication; and
in a case that the length of the frequency-domain OCC is 2 and a DMRS type is a type 2, the PTRS port and DMRS port association comprises a correspondence between three DMRS ports in candidate association with the PTRS port, which is indicated by the PTRS port and DMRS port association indication.

26. The method according to any one of claims 17 to 25, wherein in a case in which a quantity of PTRS ports is 1,

in a case that the length of the frequency-domain OCC is 2 and a DMRS type is a type 1, the information length is two bits;
in a case that the length of the frequency-domain OCC is 2 and the DMRS type is a type 2, the information length is three bits; and
in a case that the length of the frequency-domain OCC is 4, the information length is two bits, or the information length is three bits.

27. The method according to claim 26, wherein
in a case that the length of the frequency-domain OCC is 4, the information length is determined based on higher layer signalling.

28. The method according to claim 23 or 27, wherein the higher layer signalling is PTRS and DMRS association indication information or indication information that enables 8-layer uplink transmission.

29. The method according to any one of claims 17 to 25, wherein in a case in which a quantity of PTRS ports is 2,

in a case that the length of the frequency-domain OCC is 2 and a DMRS type is a type 1, the information length is two bits;
in a case that the length of the frequency-domain OCC is 2 and the DMRS type is a type 2, the information length is four bits; and
in a case that the length of the frequency-domain OCC is 4, the information length is 2*log2(N/2) bits, wherein N denotes a maximum quantity of transmission layers currently supported for uplink, and a value of N is 4 or 8.

30. The method according to any one of claims 17 to 29, wherein the determining, by the network device, a transmission parameter of a PTRS based on the PTRS information comprises one or more of following:

determining, by the network device, a power boost value for a PTRS port based on the PTRS power boost value information and a current quantity of transmission layers, wherein the power boost value is used to determine a transmit power of the PTRS;
determining, by the network device based on the PTRS port and DMRS port association and the PTRS port and DMRS port association indication in the DCI, a DMRS port associated with the PTRS port; and
determining, by the network device based on the information length of the PTRS port and DMRS port association indication, the PTRS port and DMRS port association indication in the DCI, wherein the PTRS port and DMRS port association indication is used to determine a DMRS port associated with the PTRS port.

31. The method according to claim 30, further comprising:
performing, by the network device, phase tracking based on the power boost value for the PTRS port and a detected PTRS and a detected DMRS.

32. The method according to any one of claims 17 to 31, wherein

the PTRS power boost value information is represented by using a table; and/or

the PTRS port and DMRS port association is represented by using a table

33. A terminal device, comprising:

a first determining unit, configured to determine phase tracking reference signal PTRS information based on a demodulation reference signal DMRS configuration; and
a second determining unit, configured to determine a transmission parameter of a PTRS based on the PTRS information,
wherein the PTRS information comprises one or more of following information: PTRS power boost value information, a PTRS port and DMRS port association, and an information length of a PTRS port and DMRS port association indication in downlink control information DCI,
wherein the DMRS configuration comprises a length of a frequency-domain orthogonal cover code OCC.

34. The terminal device according to claim 33, wherein the DMRS configuration further comprises a DMRS type.

35. The terminal device according to claim 33 or 34, wherein

in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6; and
in a case that the length of the frequency-domain OCC is 4, the PTRS power boost value information indicates a PTRS power boost value for a quantity of transmission layers ranging from 1 to 8.

36. The terminal device according to claim 35, wherein

in a case that the length of the frequency-domain OCC is 2 and a DMRS type is a type 1, the PTRS power boost value information indicates a PTRS power boost value only for a quantity of transmission layers ranging from 1 to 4; and
in a case that the length of the frequency-domain OCC is 2 and the DMRS type is a type 2, the PTRS power boost value information indicates a PTRS power boost value only for a quantity of transmission layers ranging from 1 to 6.

37. The terminal device according to any one of claims 33 to 36, wherein in a case in which a quantity of PTRS ports is 1,

in a case that the length of the frequency-domain OCC is 2, the PTRS port and DMRS port association comprises a correspondence between four or six DMRS ports in candidate association with the PTRS port, which is indicated by the PTRS port and DMRS port association indication in the DCI; and
in a case that the length of the frequency-domain OCC is 4, the PTRS port and DMRS port association comprises a correspondence between eight or four DMRS ports in candidate association with the PTRS port, which is indicated by the PTRS port and DMRS port association indication, wherein four DMRS ports of the eight or four DMRS ports correspond to a same codeword.

38. The terminal device according to claim 37, wherein

in a case that the length of the frequency-domain OCC is 2 and a DMRS type is a type 1, the PTRS port and DMRS port association comprises a correspondence between four DMRS ports in candidate association with the PTRS port, which is indicated by the PTRS port and DMRS port association indication; and
in a case that the length of the frequency-domain OCC is 2 and a DMRS type is a type 2, the PTRS port and DMRS port association comprises a correspondence between six DMRS ports in candidate association with the PTRS port, which is indicated by the PTRS port and DMRS port association indication.

39. The terminal device according to claim 37, wherein
in a case that the length of the frequency-domain OCC is 4, a quantity of DMRS ports in candidate association with the PTRS is determined based on higher layer signalling.

40. The terminal device according to any one of claims 33 to 36, wherein in a case in which a quantity of PTRS ports is 2,

in a case that the length of the frequency-domain OCC is 2, the PTRS port and DMRS port association comprises a correspondence between two or three DMRS ports in candidate association with the PTRS port, which is indicated by the PTRS port and DMRS port association indication in the DCI; and

in a case that the length of the frequency-domain OCC is 4, the PTRS port and DMRS port association comprises a correspondence between N/2 DMRS ports in candidate association with the PTRS port, which is indicated by the PTRS port and DMRS port association indication, wherein N denotes a maximum quantity of transmission layers currently supported for uplink, and a value of N is 4 or 8.

41. The terminal device according to claim 40, wherein

in a case that the length of the frequency-domain OCC is 2 and a DMRS type is a type 1, the PTRS port and DMRS port association comprises a correspondence between two DMRS ports in candidate association with the PTRS port, which is indicated by the PTRS port and DMRS port association indication; and

in a case that the length of the frequency-domain OCC is 2 and the DMRS type is a type 2, the PTRS port and DMRS port association comprises a correspondence between three DMRS ports in candidate association with the PTRS port, which is indicated by the PTRS port and DMRS port association indication.

42. The terminal device according to any one of claims 33 to 41, wherein in a case in which a quantity of PTRS ports is 1,

in a case that the length of the frequency-domain OCC is 2 and a DMRS type is a type 1, the information length is two bits;

in a case that the length of the frequency-domain OCC is 2 and the DMRS type is a type 2, the information length is three bits; and

in a case that the length of the frequency-domain OCC is 4, the information length is two bits, or the information length is three bits.

43. The terminal device according to claim 42, wherein in a case that the length of the frequency-domain OCC is 4, the information length is determined based on higher layer signalling.

44. The terminal device according to claim 39 or 43, wherein the higher layer signalling is PTRS and DMRS association indication information or indication information that enables 8-layer uplink transmission.

45. The terminal device according to any one of claims 33 to 41, wherein in a case in which a quantity of PTRS ports is 2,

in a case that the length of the frequency-domain OCC is 2 and a DMRS type is a type 1, the information length is two bits;

in a case that the length of the frequency-domain OCC is 2 and the DMRS type is a type 2, the information length is four bits; and

in a case that the length of the frequency-domain OCC is 4, the information length is $2*\log2(N/2)$ bits, wherein N denotes a maximum quantity of transmission layers currently supported for uplink, and a value of N is 4 or 8.

46. The terminal device according to any one of claims 33 to 45, wherein the second determining unit is specifically configured to perform one or more of following:

determining a power boost value for a PTRS port based on the PTRS power boost value information and a current quantity of transmission layers, wherein the power boost value is used to determine a transmit power of the PTRS;

determining, based on the PTRS port and DMRS port association and the PTRS port and DMRS port association indication in the DCI, a DMRS port associated with the PTRS port; and

determining, based on the information length of the PTRS port and DMRS port association indication, the PTRS port and DMRS port association indication in the DCI, wherein the PTRS port and DMRS port association indication is used to determine a DMRS port associated with the PTRS port.

47. The terminal device according to claim 46, further comprising:

a transmitting unit, configured to determine, based on the DMRS port associated with the PTRS port, a sequence, a frequency domain resource, and a precoding matrix for the PTRS, and transmit the PTRS.

48. The terminal device according to any one of claims 33 to 47, wherein

the PTRS power boost value information is represented by using a table; and/or
the PTRS port and DMRS port association is represented by using a table.

**49.** A network device, comprising:

a third determining unit, configured to determine phase tracking reference signal PTRS information based on a demodulation reference signal DMRS configuration; and
a fourth determining unit, configured to determine a transmission parameter of a PTRS based on the PTRS information,
wherein the PTRS information comprises one or more of following information: PTRS power boost value information, a PTRS port and DMRS port association, and an information length of a PTRS port and DMRS port association indication in downlink control information DCI,
wherein the DMRS configuration comprises a length of a frequency-domain orthogonal cover code OCC.

**50.** The network device according to claim 49, wherein the DMRS configuration further comprises a DMRS type.

**51.** The network device according to claim 49 or 50, wherein

in a case that the length of the frequency-domain OCC is 2, the PTRS power boost value information indicates a PTRS power boost value only for a quantity of transmission layers ranging from 1 to 4, or the PTRS power boost value information indicates a PTRS power boost value only for a quantity of transmission layers ranging from 1 to 6; and
in a case that the length of the frequency-domain OCC is 4, the PTRS power boost value information indicates a PTRS power boost value for a quantity of transmission layers ranging from 1 to 8.

**52.** The network device according to claim 51, wherein

in a case that the length of the frequency-domain OCC is 2 and a DMRS type is a type 1, the PTRS power boost value information indicates a PTRS power boost value only for a quantity of transmission layers ranging from 1 to 4; and
in a case that the length of the frequency-domain OCC is 2 and the DMRS type is a type 2, the PTRS power boost value information indicates a PTRS power boost value only for a quantity of transmission layers ranging from 1 to 6.

**53.** The network device according to any one of claims 49 to 52, wherein in a case in which a quantity of PTRS ports is 1,

in a case that the length of the frequency-domain OCC is 2, the PTRS port and DMRS port association comprises a correspondence between four or six DMRS ports in candidate association with the PTRS port, which is indicated by the PTRS port and DMRS port association indication in the DCI; and
in a case that the length of the frequency-domain OCC is 4, the PTRS port and DMRS port association comprises a correspondence between eight or four DMRS ports in candidate association with the PTRS port, which is indicated by the PTRS port and DMRS port association indication, wherein four DMRS ports of the eight or four DMRS ports correspond to a same codeword.

**54.** The network device according to claim 53, wherein

in a case that the length of the frequency-domain OCC is 2 and a DMRS type is a type 1, the PTRS port and DMRS port association comprises a correspondence between four DMRS ports in candidate association with the PTRS port, which is indicated by the PTRS port and DMRS port association indication; and
in a case that the length of the frequency-domain OCC is 2 and a DMRS type is a type 2, the PTRS port and DMRS port association comprises a correspondence between six DMRS ports in candidate association with the PTRS port, which is indicated by the PTRS port and DMRS port association indication.

**55.** The network device according to claim 53, wherein
in a case that the length of the frequency-domain OCC is 4, a quantity of DMRS ports in candidate association with the PTRS is determined based on higher layer signalling.

**56.** The network device according to any one of claims 49 to 52, wherein in a case in which a quantity of PTRS ports is 2,

in a case that the length of the frequency-domain OCC is 2, the PTRS port and DMRS port association comprises a correspondence between two or three DMRS ports in candidate association with the PTRS port, which is indicdated by the PTRS port and DMRS port association indication in the DCI; and

in a case that the length of the frequency-domain OCC is 4, the PTRS port and DMRS port association comprises a correspondence between N/2 DMRS ports in candidate association with the PTRS port, which is indicated by the PTRS port and DMRS port association indication, wherein N denotes a maximum quantity of transmission layers currently supported for uplink, and a value of N is 4 or 8.

57. The network device according to claim 56, wherein

in a case that the length of the frequency-domain OCC is 2 and a DMRS type is a type 1, the PTRS port and DMRS port association comprises a correspondence between two DMRS ports in candidate association with the PTRS port, which is indicated by the PTRS port and DMRS port association indication; and

in a case that the length of the frequency-domain OCC is 2 and the DMRS type is a type 2, the PTRS port and DMRS port association comprises a correspondence between three DMRS ports in candidate association with the PTRS port, which is indicated by the PTRS port and DMRS port association indication.

58. The network device according to any one of claims 49 to 57, wherein in a case in which a quantity of PTRS ports is 1,

in a case that the length of the frequency-domain OCC is 2 and a DMRS type is a type 1, the information length is two bits;

in a case that the length of the frequency-domain OCC is 2 and the DMRS type is a type 2, the information length is three bits; and

in a case that the length of the frequency-domain OCC is 4, the information length is two bits, or the information length is three bits.

59. The network device according to claim 58, wherein

in a case that the length of the frequency-domain OCC is 4, the information length is determined based on higher layer signalling.

60. The network device according to claim 55 or 59, wherein the higher layer signalling is PTRS and DMRS association indication information or indication information that enables 8-layer uplink transmission.

61. The network device according to any one of claims 49 to 57, wherein in a case in which a quantity of PTRS ports is 2,

in a case that the length of the frequency-domain OCC is 2 and a DMRS type is a type 1, the information length is two bits;

in a case that the length of the frequency-domain OCC is 2 and the DMRS type is a type 2, the information length is four bits; and

in a case that the length of the frequency-domain OCC is 4, the information length is $2*log2(N/2)$ bits, wherein N denotes a maximum quantity of transmission layers currently supported for uplink, and a value of N is 4 or 8.

62. The network device according to any one of claims 49 to 61, wherein the fourth determining unit is specifically configured to perform one or more of following:

determining a power boost value for a PTRS port based on the PTRS power boost value information and a current quantity of transmission layers, wherein the power boost value is used to determine a transmit power of the PTRS;

determining, based on the PTRS port and DMRS port association and the PTRS port and DMRS port association indication in the DCI, a DMRS port associated with the PTRS port; and

determining, based on the information length of the PTRS port and DMRS port association indication, the PTRS port and DMRS port association indication in the DCI, wherein the PTRS port and DMRS port association indication is used to determine a DMRS port associated with the PTRS port.

63. The network device according to claim 62, further comprising:

a phase tracking unit, configured to perform phase tracking based on the power boost value for the PTRS port and a detected PTRS and a detected DMRS.

64. The network device according to any one of claims 49 to 63, wherein

the PTRS power boost value information is represented by using a table; and/or
the PTRS port and DMRS port association is represented by using a table.

65. A terminal device, comprising a memory and a processor, wherein the memory is configured to store a program, and the processor is configured to invoke the program in the memory, to cause the terminal device to execute the method according to any one of claims 1 to 16.

66. A network device, comprising a memory and a processor, wherein the memory is configured to store a program, and the processor is configured to invoke the program in the memory, to cause the network device to execute the method according to any one of claims 17 to 32.

67. An apparatus, comprising a processor configured to invoke a program from a memory, to cause the apparatus to execute the method according to any one of claims 1 to 32.

68. A chip, comprising a processor configured to invoke a program from a memory, to cause a device on which the chip is installed to execute the method according to any one of claims 1 to 32.

69. A computer-readable storage medium, wherein the computer-readable storage medium stores a program, and the program causes a computer to execute the method according to any one of claims 1 to 32.

70. A computer program product, comprising a program, wherein the program causes a computer to execute the method according to any one of claims 1 to 32.

71. A computer program, wherein the computer program causes a computer to execute the method according to any one of claims 1 to 32.

FIG. 1

First CDM group

Second CDM group

Single symbol DMRS

Two symbols DMRS

FIG. 2A

Single symbol
DMRS

Two symbols
DMRS

FIG. 2B

| Terminal device | Network device |
|---|---|
| S310: Determine PTRS information based on a DMRS configuration | S320: Determine PTRS information based on a DMRS configuration |
| S330: Determine a transmission parameter of a PTRS based on the PTRS information | S340: Determine a transmission parameter of a PTRS based on the PTRS information |

S350: PTRS

FIG. 3

Terminal device 400

First determining unit 410

Second determining unit 420

FIG. 4

Network device 500

Third determining unit 510

Fourth determining unit 520

FIG. 5

Apparatus 600

Processor 610

Memory 620

Transceiver 630

FIG. 6

<table>
<tr><td colspan="2">**INTERNATIONAL SEARCH REPORT**</td><td>International application No.<br>**PCT/CN2023/072178**</td></tr>
</table>

| A. | CLASSIFICATION OF SUBJECT MATTER |
|---|---|

H04W72/0453(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE, 3GPP: 参考信号, 相位跟踪, 正交码, 功率提升, 端口, DMRS, PTRS, OCC, power boosting, port

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108400855 A (ZTE CORP.) 14 August 2018 (2018-08-14)<br>description, paragraphs [0317]-[0923], and figures 1-8 | 1-71 |
| A | CN 109478974 A (LG ELECTRONICS, INC.) 15 March 2019 (2019-03-15)<br>entire document | 1-71 |
| A | US 2021360615 A1 (LG ELECTRONICS, INC.) 18 November 2021 (2021-11-18)<br>entire document | 1-71 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 March 2023** | **26 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2023/072178** |

| Patent document cited in search report | | | Publication date (day/month/year) | Patent family member(s) | | | Publication date (day/month/year) |
| --- | --- | --- | --- | --- | --- | --- | --- |
| CN | 108400855 | A | 14 August 2018 | US | 2020213050 | A1 | 02 July 2020 |
| CN | 109478974 | A | 15 March 2019 | US | 2018351719 | A1 | 06 December 2018 |
| US | 2021360615 | A1 | 18 November 2021 | None | | | |

Form PCT/ISA/210 (patent family annex) (July 2022)